(19) Europäisches Patentamt

European Patent Office

Office européen des brevets

(11) **EP 0 642 265 B1**

(12) **EUROPÄISCHE PATENTSCHRIFT**

(45) Veröffentlichungstag und Bekanntmachung des Hinweises auf die Patenterteilung:
**16.12.1998 Patentblatt 1998/51**

(51) Int Cl.$^6$: **H04N 5/32**

(21) Anmeldenummer: **94202511.5**

(22) Anmeldetag: **02.09.1994**

(54) **Verfahren und Anordnung zum Erzeugen von Röntgenaufnahmen**

Method and apparatus for generating X ray exposures

Procédé et appareil pour la génération de radiographies

(84) Benannte Vertragsstaaten:
**DE FR GB NL**

(30) Priorität: **08.09.1993 DE 4330366**

(43) Veröffentlichungstag der Anmeldung:
**08.03.1995 Patentblatt 1995/10**

(73) Patentinhaber:
• **Philips Patentverwaltung GmbH**
  **22335 Hamburg (DE)**
  Benannte Vertragsstaaten:
  **DE**
• **Koninklijke Philips Electronics N.V.**
  **5621 BA Eindhoven (NL)**
  Benannte Vertragsstaaten:
  **FR GB NL**

(72) Erfinder:
• **Heinemann, Hartmut**
  **D-22926 Ahrensburg (DE)**
• **Rupp, Stephan**
  **D-74354 Besigheim (DE)**

(74) Vertreter: **Hartmann, Heinrich, Dipl.-Ing. et al**
**Philips Patentverwaltung GmbH,**
**Röntgenstrasse 24**
**22335 Hamburg (DE)**

(56) Entgegenhaltungen:
EP-A- 0 077 239          EP-A- 0 444 737
DE-A- 3 938 096

• **FERNSEH- UND KINO-TECHNIK, Bd.44, Nr.12, Dezember 1990, HEIDELBERG, DE Seiten 665 - 670 672, XP000177673 G. WISCHERMANN 'Medianfilterung von Videosignalen'**

## Beschreibung

Die Erfindung betrifft ein Verfahren zum Erzeugen von Röntgenbildern, bei dem auf der Oberfläche eines Photoleiters ein der Röntgenstrahlenintensität entsprechendes Ladungsmuster erzeugt wird, das mit einer Anzahl von Sonden zeilenweise abgetastet wird, die die Ladung auf jeweils aneinander angrenzenden, mehrere Zeilen umfassenden Abtastbereichen des Photoleiters umfassen und von der Ladung abhängige digitale Bildwerte der Röntgenaufnahme liefern.

Ein solches Verfahren ist aus der EP-A-456 322 bekannt. Die Zahl der Sonden, mit denen die Ladung auf der Oberfläche des Photoleiters abgetastet wird, ist dabei wesentlich kleiner als die Zahl der Zeilen, aus denen sich eine Röntgenaufnahme zusammensetzt. Infolgedessen muß jede Sonde innerhalb des für sie vorgesehenen Abtastbereiches auf der Oberfläche des Photoleiters eine Anzahl von Zeilen nacheinander abtasten.

Es hat sich gezeigt, daß in der Röntgenaufnahme an den Übergängen von einem Abtastbereich zum anderen aufgrund geringer Helligkeitsunterschiede in Zeilenrichtung verlaufende Kanten entstehen, die sich auch durch die in obiger Veröffentlichung genannten Korrekturmaßnahmen nicht vollständig unterdrücken lassen und einen streifigen Bildeindruck entstehen lassen.

Es ist Aufgabe der vorliegenden Erfindung, ein Verfahren anzugeben, das diese Kanten weitgehend beseitigen kann bzw. eine Anordnung zur Durchführung des Verfahrens.

Diese Aufgabe wird bei einem Verfahren der eingangs genannten Art durch folgende Maßnahmen gelöst:

a) Bildung von Korrekturwerten für die Bildpunkte der Bildzeilen an den Rändern der Abtastbereiche der Sonden, wobei die Größe und Vorzeichen der Korrekturwerte so bemessen sind, daß die aus der Überlagerung der Korrekturwerte und der Bildwerte resultierenden korrigierten Bildwerte der einzelnen Sonden den korrigierten Bildwerten der jeweils benachbarten Sonden entsprechen.
b) Bildung von Zwischenwerten für die zwischen den Rändern der Abtastbereiche der Sonden befindlichen Bildzeilen durch Interpolation der Korrekturwerte, die der gleichen Sonde zugeordnet sind,
c) Überlagerung der Korrekturwerte bzw. der Zwischenwerte und der Bildwerte zwecks Erzeugung von korrigierten Bildwerten für die Bildzeilen der Abtastbereiche.

Bei der Erfindung werden also für die Bildzeilen an den Rändern der Abtastbereiche Korrekturwerte gebildet, die den Bildwerten für diese Bildzeilen überlagert werden, so daß sich aus der Überlagerung korrigierte Bildwerte ergeben, die die gleiche Größe haben wie die korrigierten Bildwerte für den Abtastbereich der benachbarten Sonde.

Die Korrektur darf sich allerdings nicht auf die Zeilen an den Rändern beschränken, da andernfalls innerhalb der Abtastbereiche Helligkeitssprünge bzw. störende, in Zeilenrichtung verlaufende Kanten entstehen könnten. Deshalb werden für die Bildzeilen zwischen den Rändern Zwischenwerte durch Interpolation der für die Bildzeilen an den Rändern des Abtastbereiches gebildeten Korrekturwerte berechnet und den Bildwerten dieser Bildzeilen überlagert, so daß durch die Korrektur selbst keine Helligkeitssprünge hervorgerufen werden können.

Grundsätzlich ist es möglich, die Abtastbereiche der einzelnen Sonden so zu wählen, daß die Abtastbereiche aneinander anschließen, ohne eine Zeile gemeinsam zu haben. In diesem Fall werden aber Helligkeitssprünge an den Rändern des Abtastbereichs, die durch das abzubildende Objekt hervorgerufen werden und nicht durch unterschiedliche Eigenschaften der Elektrometersonden, ebenfalls unterdrückt, so daß das Bild verfälscht wird. Diese Verfälschungen können nach einer bevorzugten Weiterbildung der Erfindung dadurch verhindert werden, daß die Sonden so über die Oberfläche des Photoleiters geführt werden, daß sich die Abtastbereiche beider Sonden überlappen und daß die Korrekturwerte jeweils aus den Bildwerten einer von benachbarten Sonden abgetasteten Bildzeile abgeleitet werden. Hierbei werden also die Korrekturwerte aus den Bildwerten einer Zeile abgeleitet, die von jeweils zwei benachbarte Sonden (allerdings zu unterschiedlichen Zeitpunkten) abgetastet wird. In diesem Fall sind die Korrekturwerte nur von den unterschiedlichen Eigenschaften der Sonden abhängig, nicht aber vom Bildinhalt.

An dieser Stelle sei erwähnt, daß aus der DE-OS 39 38 096 bereits ein Verfahren der eingangs genannten Art bekannt ist, bei dem zur Unterdrückung der Streifigkeit die Sonden so geführt sind, daß benachbarte Sonden die gleiche räumliche Zeile zu unterschiedlichen Zeiten abtasten. Aus dem Vergleich der von den benachbarten Sonden für diese Zeile gelieferten Bildwerte werden die relativen Empfindlichkeiten der Sonden untereinander bestimmt. Mit den auf diese Weise ermittelten Empfindlichkeitsquotienten werden anschließend die von den einzelnen Sonden gelieferten Bildwerte multipliziert, um die Streifen aus dem Bild zu entfernen. Wird die Empfindlichkeit der Sonden nicht exakt bestimmt, dann ergeben sich bei diesem Verfahren für den gesamten Abtastbereich zu große oder zu kleine Bildwerte, und dieser Fehler pflanzt sich auf die von den nachfolgenden Sonden abgetasteten Bildbereiche fort. Bei der Erfindung gibt es demgegenüber bei der fehlerhaften Bestimmung eines Korrekturwerts für eine Bildzeile am Rande eines Abtastbereiches nur für diesen Abtastbereich eine Verfälschung, die überdies umso kleiner wird, je weiter die einzelnen Zeilen von der Zeile am Rand entfernt sind.

In der Praxis läßt es sich nicht immer erreichen, daß zwei benachbarte Sonden (zu unterschiedlichen Zeitpunkten) exakt die gleiche Zeile abtasten, d.h. denselben linienförmigen Bereich des Photoleiters. Vielmehr kann zwischen diesen beiden Zeilen ein gewisser Versatz (senkrecht zur Zeilenrichtung) auftreten. Dieser Versatz äußert sich darin, daß - ähnlich wie bei einer Anordnung, bei der benachbarte Sonden keine gemeinsame Zeile abtasten - in diesen Zeilen bzw. der daraus abgeleiteten Differenz Signalspitzen (peaks) auftreten. Infolge des Korrekturverfahrens bewirken diese Signalspitzen eine Bildverfälschung auch in anderen Zeilen. Diese Bildverfälschung läßt sich wenigstens zum Teil dadurch verringern, daß vor der Bildung der Korrekturwerte die Wirkung von Signalspitzen in den Bildzeilen an den Rändern des Abtastbereiches unterdrückt wird, vorzugsweise durch eine in Zeilenrichtung verlaufende Medianfilterung

In bevorzugter Ausgestaltung der Erfindung ist vorgesehen, daß die Korrekturwerte so gebildet werden, daß die Korrekturwerte benachbarter Sonden für den gleichen Bildpunkt bzw. für benachbarte Bildpunkte die gleiche Größe, aber entgegengesetztes Vorzeichen haben. Bei dieser Ausgestaltung wird die Bildinformation durch die Korrektur am wenigsten verändert.

Eine Anordnung zum Durchführen des erfindungsgemäßen Verfahrens mit einem Photoleiter, auf dessen Oberfläche ein der örtlichen Röntgenstrahlenintensität entsprechendes Ladungsmuster erzeugt wird, mit einer Anzahl von Sonden, die die Ladung jeweils in einem Abtastbereich der Oberfläche des Photoleiters zeilenweise abtasten und von der Ladung an der Oberfläche abhängige elektrische Signale liefern und mit Mitteln zum Umsetzen der Signale in von der Ladung an den Bildpunkten abhängige Bildwerte ist gekennzeichnet durch

a) Mittel zur Bildung von Korrekturwerten für die Bildpunkte der Bildzeilen an den Rändern der Abtastbereiche der Sonden, wobei die Größe und Vorzeichen der Korrekturwerte so bemessen sind, daß die aus der Überlagerung der Korrekturwerte und der Bildwerte resultierenden korrigierten Bildwerte der einzelnen Sonden den korrigierten Bildwerten der jeweils benachbarten Sonden entsprechen,
b) Mittel zur Bildung von Zwischenwerten für die zwischen den Rändern der Abtastbereiche der Sonden befindlichen Bildzeilen durch Interpolation der Korrekturwerte, die der gleichen Sonde zugeordnet sind,
c) Mittel zur Überlagerung der Korrekturwerte bzw. der Zwischenwerte und der Bildwerte zwecks Erzeugung von korrigierten Bildwerten für die Bildzeilen der Abtastbereiche.

Die Erfindung wird nachstehend anhand der Zeichnung näher erläutert. Es zeigen:

Fig. 1                eine Anordnung, mit der das erfindungsgemäße Verfahren durchführbar ist,

Fig. 2a bis 2c        die Verläufe verschiedener Signale senkrecht zur Zeilenrichtung,

Fig. 3a bis 3c        die Verläufe verschiedener Signale in Zeilenrichtung und

Fig. 4                ein Flußdiagramm zur Erläuterung des Programms zur Durchführung des erfindungsgemäßen Verfahrens.

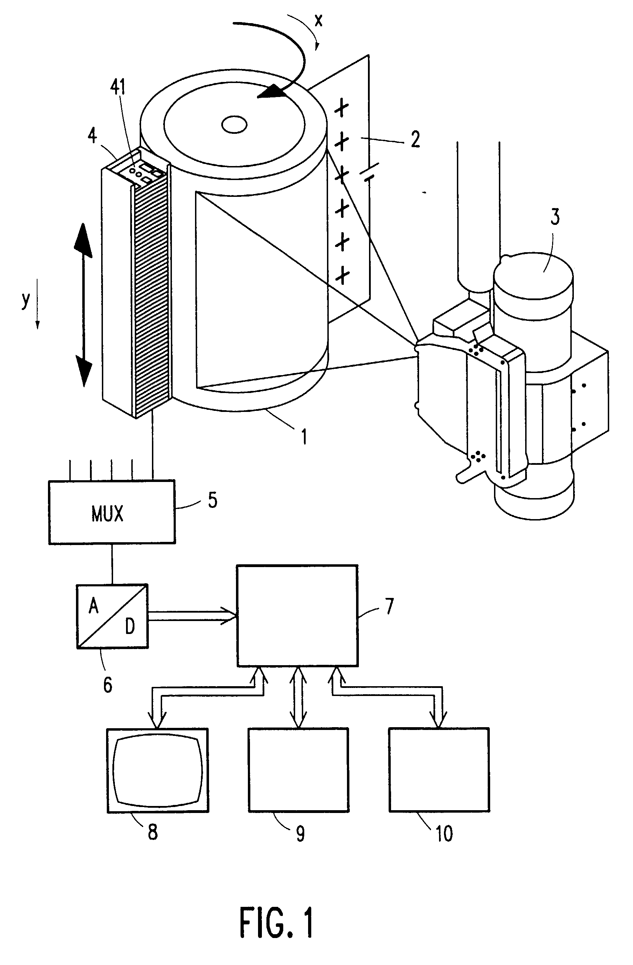

In Fig. 1 ist mit 1 eine Selentrommel bezeichnet, d. h. ein zylinderförmiger Körper aus Metall, dessen Zylinderoberfläche mit einem Photoleiter aus amorphem Selen beschichtet ist. Die Selenschicht kann eine Dicke von ca. 0,5 mm haben. Vor einer Röntgenaufnahme wird die Selenschicht mittels einer Korona aufgeladen, wie durch 2 schematisch angedeutet ist, so daß sich im Selen ein starkes elektrisches Feld aufbaut.

Bei einer Röntgenaufnahme eines nicht näher dargestellten Patienten mittels eines Röntgenstrahlers 3 werden Röntgenphotonen in der Selenschicht absorbiert, wodurch Ladungsträger freigesetzt werden. Diese freien Ladungsträger wandern unter dem Einfluß des elektrischen Feldes an die Oberfläche der Selenschicht und neutralisieren dort einen Teil der vorher aufgebrachten Ladung. Je nach lokaler Bestrahlungsstärke wird die Oberflächenladung mehr oder weniger stark abgebaut. Die Röntgenbelichtung führt also zu einem latenten Bild in Form eines Ladungsmusters auf der Selenoberfläche.

Das so erzeugte Röntgenbild wird von einer Ausleseeinheit 4 abgetastet, die seitlich neben der Selentrommel 1 angeordnet ist und eine Anzahl von Sonden 41 umfaßt. Die Sonden sind in axialer Richtung der Selentrommel 1 versetzt und in gleichmäßigem Abstand voneinander so angeordnet, daß sie sich über die gesamte axiale Ausdehnung des durch die Röntgenaufnahme erzeugten Ladungsmusters erstrecken. Fig. 1 läßt nur die oberste Sonde 41 (mit der zugehörigen Elektronik) erkennen. Von den anderen Sonden ist in Fig. 1 nur eine Kante des sie tragenden Substrats sichtbar.

Zum Auslesen wird die Selentrommel auf eine vergleichsweise hohe Drehzahl gebracht, wobei jede Sonde einen in Umfangsrichtung der Trommel verlaufenden zeilenförmigen Teil des Ladungsmusters erfaßt. Die Zeilenrichtung wird nachfolgend auch als x-Richtung bezeichnet. Da die Zahl der Zeilen, mit denen das Ladungsmuster abgetastet werden muß - z.B. 2048 - wesentlich größer ist als die Zahl der Sonden, muß jede Sonde innerhalb des für sie bestimmten Abtastbereiches nacheinander eine Anzahl von Zeilen erfassen. Zu diesem Zweck wird die Ausleseeinheit 4 mit den Sonden während der Umdrehung der Trommel in axialer Richtung (im folgenden als y-Richtung bezeichnet) der Trommel verschoben und zwar so, daß nach einer vollständigen Umdrehung der Trommel die Ausleseeinheit um die Breite einer Zeile bzw. eines Bildpunktes verschoben ist. Dadurch beschreiben die Zeilen einen Teil einer Schraubenlinie, deren Steigung jedoch so gering ist, daß sie praktisch mit der Umfangsrichtung der Trommel zusammenfällt. Die Verschiebung der Ausleseeinheit ist so bemessen, daß die Sonden 41 zuletzt eine Zeile abtasten, die schon - als erste - von einer benachbarten Sonde abgetastet wurde.

Die von den Sonden in der Ausleseeinheit 4 erzeugten analogen elektrischen Signale werden über einen Analog-Multiplexer 5 und einen Analog-Digital-Wandler 6 einer Bildverarbeitungseinheit 7 zugeführt, die mit einem Monitor 8 zur Wiedergabe der Röntgenaufnahme, einem schnellen Halbleiter-Bildspeicher 9 und einem Archiv-Bildspeicher 10 mit im Vergleich zum Speicher 9 großer Speicherkapazität gekoppelt ist. Die Bildverarbeitungseinheit 7 umfaßt einen geeignet programmierten Rechner, ggf. in Verbindung mit einem digitalen Signalprozessor.

Insoweit, als bisher beschrieben, ist die in Fig. 1 dargestellte Anordnung aus der EP-A- 456 322 bekannt.

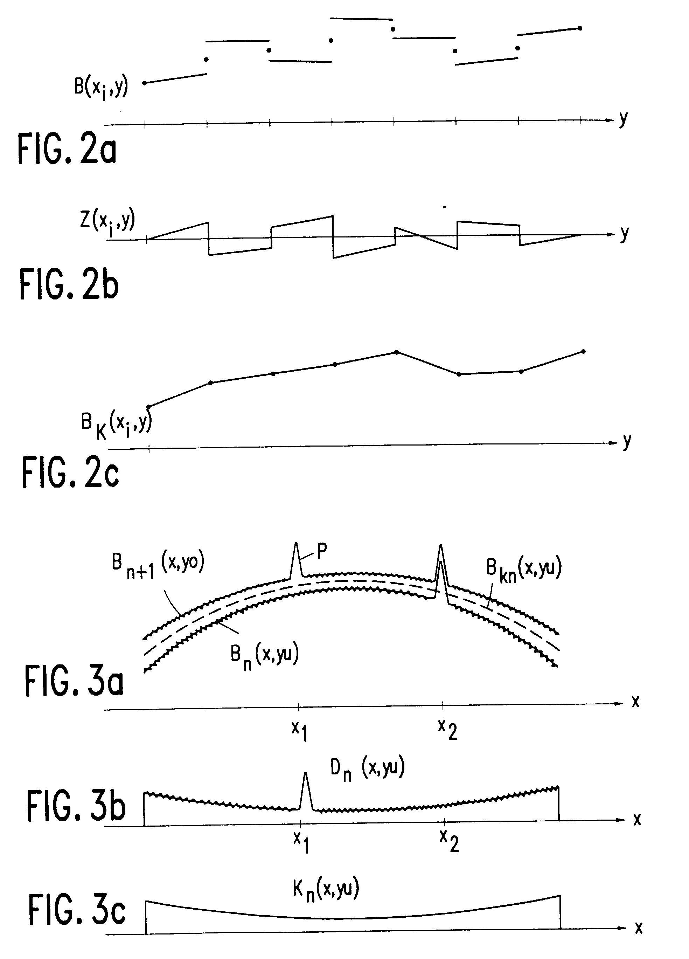

Nachdem das gesamte Ladungsmuster abgetastet ist, ist die Röntgenaufnahme im Bildspeicher 9 gespeichert. Danach wird dieses Bild einer Reihe von Verarbeitungsschritten unterzogen, in denen u.a. die unterschiedliche Empfindlichkeit der Sonden sowie z.B. die Dunkelentladung des Bildes berücksichtigt wird. Trotz der Verarbeitungsschritte zeigt ein solches Bild an den Übergängen zwischen den Abtastbereichen in der Regel Helligkeitssprünge, die zu einem streifigen Bildeindruck führen. Diese Helligkeitssprünge sind - stark überbetont - aus Fig. 2a ersichtlich, die den Verlauf der Helligkeit (bzw. der Bildwerte) längs einer - auf der Trommel 1 in axialer Richtung verlaufende-Spalte darstellt. Dabei bezeichnet x die Zeilenrichtung und y die dazu senkrechte Spaltenrichtung. $B(x_i,y)$ bezeichnet somit den Verlauf der Bildwerte längs der durch $x=x_j$ gekennzeichneten Spalte. Man erkennt aus Fig. 2a, daß sich innerhalb eines Abtastbereichs die Helligkeit kontinuierlich ändert, während beim Übergang von einem Abtastbereich zum nächsten die Helligkeit sich sprungartig ändert. Da die Abtastung des Ladungsmusters in der Weise erfolgt, daß die letzte Zeile des Abtastbereichs der einen Sonde räumlich mit der ersten Zeile der benachbarten Sonde zusammenfällt, gibt es für diese Zeile zwei Bildwerte.

Das Korrekturverfahren, mit dem diese Helligkeitssprünge und die damit einhergehende Streifigkeit des Bildes unterdrückt werden, besteht zusammengefaßt darin, daß für die Zeilen an den Rändern der Abtastbereiche (d.h. für die Zeilen, die von der einen Sonde als letzte und von der benachbarten Sonde als erste abgetastet wird) Korrekturwerte gebildet werden. Diese Korrekturwerte sind einander entgegengesetzt gleich und in der Regel so groß, daß ihre Überlagerung mit den Bildwerten, d.h. deren Addition zu den Bildwerten bzw. deren Subtraktion von den Bildwerten zu Werten führt, die den arithmetischen Mittelwert der Bildwerte in den betreffenden Zeilen bilden und die in Fig. 2a durch Punkte angedeutet sind. Um die Bildwerte für die dazwischenliegenden Zeilen dem korrigierten Verlauf anpassen zu können, werden aus den für die obere und die untere Zeile eines Abtastbereichs ermittelten Korrekturwerten Zwischenwerte $Z(x_i,y)$ gebildet, derart, daß die Zwischenwerte einen kontinuierlichen Verlauf vom einen Korrekturwert zum anderen geben. Die Korrekturwerte bzw. die daraus abgeleiteten Zwischenwerte ergeben sich aus Fig. 2b. Man entnimmt daraus, daß sich die Zwischenwerte in Spaltrichtung linear ändern. Addiert man den Verlauf der Zwischenwerte $Z(x_i,y)$ gemäß 2b zu den Bildwerten $B(x_i,y)$, dann resultieren korrigierte Bildwerte $B_k(x_i,y)$ entsprechend Fig. 2c.

Das so korrigierte Bild enthält keine Sprungstellen mehr. Die Bildinformation wird durch diese Korrektur so wenig wie möglich verändert.

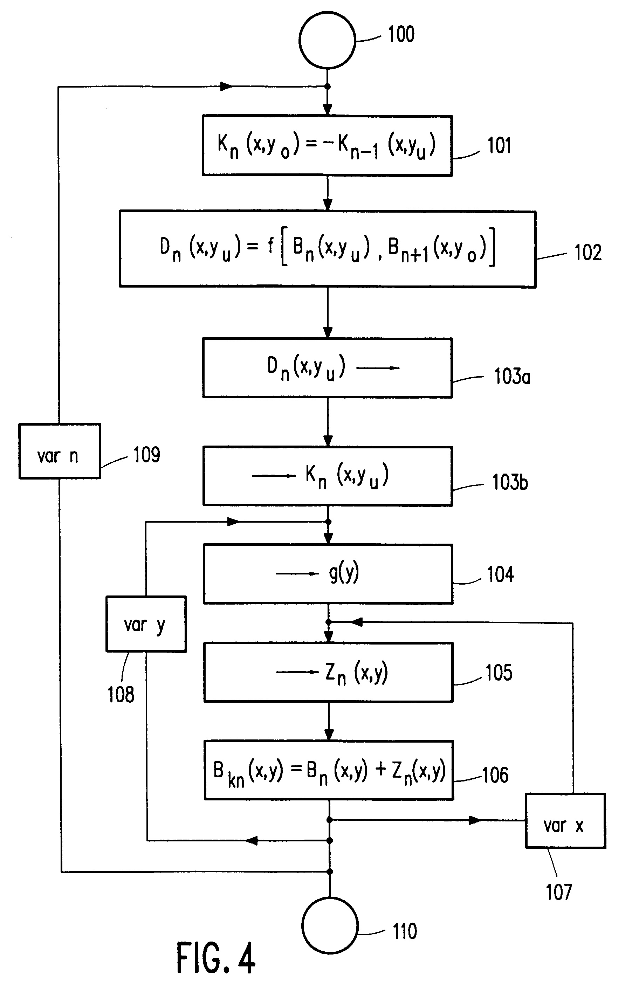

Im folgenden soll im einzelnen anhand eines in Fig. 4 dargestellten Flußdiagramms die zur Beseitigung der streifenförmigen Artefakte im Bild vorgesehene Korrektur der Bildwerte erläutert werden. Der Block 100 symbolisiert die vorangegangenen Verarbeitungsschritte, während die Blöcke 101 . . . 106 einen Programmteil bilden, der so oft durchlaufen wird, wie die Ausleseeinheit 4 Sonden enthält (z.B. 36 mal). Die Blöcke erläutern die Korrektur der mit der n-ten Sonde gewonnenen Bildwerte, wobei n zwischen zwei und z.B. 36 liegen kann. Dabei ist vorausgesetzt, daß für die letzte Zeile (die letzte Zeile eines Abtastbereichs wird im folgenden mit $y_u$ bezeichnet) der vorausgehenden Sonde n-1 bereits Korrekturwerte $K_{n-1}(x,y_u)$ berechnet worden sind. Für die darauffolgende Sonde n und deren erste Zeile ($y_o$) die voraussetzungsgemäß dieselbe räumliche Lage hat wie die letzte Zeile $y_u$ der vorausgehenden Sonde n-1 gilt dann die Beziehung:

$$K_n(x,y_o) = - K_{n-1}(x,y_u) \qquad (1)$$

Wie bereits ausgeführt, sind nämlich die Korrekturwerte benachbarter Sonden für die gleiche räumliche Zeile einander entgegengesetzt gleich. Dieser Schritt wird im Block 101 durchgeführt.

Zur Bestimmung der Korrekturwerte für die letzte Zeile ($y_u$) der Sonde n wird im Block 102 gemäß der Gleichung

$$D_n(x,y_u) = 0,5 \bullet [B_{n+1}(x,y_o) - B_n(x,y_u)] \qquad (2)$$

ein Wert $D_n(x,y_u)$ errechnet. Dabei stellt $B_{n+1}(x,y_o)$ die Bildwerte dar, die die nachfolgende Sonde n+1 für ihre erste Zeile $y_o$ liefert und $B_n(x,y_u)$ stellt die Bildwerte der letzten Zeile der n-ten Sonde dar, wobei wiederum unterstellt wird, daß die letzte Zeile der Sonde n gleich der ersten Zeile der darauffolgenden Sonde n+1 ist. Grundsätzlich würde es in vielen Fällen genügen, wenn man nur für einen Anzahl von Stützstellen Korrekturwerte bestimmen würde und weitere Korrrekturwerte daraus durch Interpolation oder ähnliche Verfahren ableitet. Da man aber jeden Bildpunkt eines Abtastbereiches korrigieren muß, ist es am einfachsten, sämtliche Bildwerte dieser Zeile heranzuziehen, da sie ohnehin vorhanden sind.

Fig. 3a zeigt den Verlauf der Bildwerte der Sonden n bzw. n+1 für diese Zeile. Man erkennt, daß der Verlauf der Bildwerte für diese Zeile nicht identisch ist - was der Fall sein müßte, wenn die Sonden identisch wären und eine Zeile mit identischer räumlicher Lage abtasten würden. Man erkennt weiter, daß der Verlauf der Bildwerte der Sonde n+1 im Bereich $x_1$ eine schmale Spitze P aufweist, während die Sonde n für diesen Teil der Bildzeile keine vergleichbare Änderung aufweist. Dagegen weisen beide Sonden im Bereich $x_2$ eine entsprechende Spitze auf.

Fig. 3b zeigt den daraus gemäß Gleichung (2) errechneten Verlauf von $D_n(x,y_o)$ - im vergrößerten Maßstab. Man erkennt, daß sich die Spitzen bei $x_2$ eliminiert haben, während die Spitze bei $x_1$ erhalten geblieben ist. Diese sprungartige Änderung der Differenz in einem kleinen Bereich der Zeile, die immer dann auftreten kann, wenn die von der Sonde n + 1 abgetastete Zeile $y_o$ nicht die gleiche Lage hat wie die von der Sonde n abgetastete Zeile $y_u$, würde sich über den ganzen Abtastbereich fortsetzen, wenn man sie zur Bildung des Korrekturwertes mit heranziehen würde. Deshalb werden in einem ersten Schritt (103a) die Spitzen (peaks) in der Zeile $D_n(x,y_u)$ unterdrückt. Vorzugsweise wird dazu ein Medianfilter mit einer Kernelgröße, die mindestens der zu erwartenden maximalen Breite der Spitzen entspricht, über diese Zeile $D_n(x,y_u)$ geführt. Dadurch werden zunächst alle Spitzen entfernt.

Anschließend wird in einem nächsten Schritt (103b) die Zeile $D_n(x,y_u)$ einer linearen Tiefpaßfilterung in x-Richtung unterzogen, wobei der Kernel wesentlich größer als der der vorangegangenen Medianfilterung sein kann. Dadurch werden höherfrequente Unebenheiten (Rauschen) auf der Zeile $D_n$ geglättet. Diese Tiefpaßfilterung kann im einfachsten Fall dadurch geschehen, daß jeder Wert der Folge $D_n(x,y_u)$ durch den arithmetischen Mittelwert aus diesem Wert und den entsprechenden Werten für eine Anzahl benachbarter Bildpunkte ersetzt wird.

Aus diesen beiden Filterungen resultieren die Korrekturwerte $K_n(x,y_u)$ mit ihrem in Fig. 3c dargestellten geglätteten Verlauf.

Nachdem auf diese Weise die Korrekturwerte $K_n(x, y_o)$ und $K_n(x,y_u)$ für die oberste Zeile $y_o$ und die unterste Zeile $y_u$ des Abtastbereichs der n-ten Sonde ermittelt worden sind, werden für die zwischen diesen beiden Zeilen innerhalb des Abtastbereichs liegenden Zeilen nacheinander Zwischenwerte ermittelt, die den dort ermittelten Bildwerten überlagert werden. Diese Zwischenwerte ergeben sich aus den Korrekturwerten an den Randzeilen des Abtastbreichs durch eine vorzugsweise lineare Interpolation entsprechend dem Abstand der betreffenden Zeile von den beiden anderen Zeilen. Für jede Zeile y gibt es also gemäß der Gleichung

$$g = (y-y_o) / (y_u-y_o) \qquad (3)$$

einen Interpolationsfaktor g, der im Block 104 ermittelt wird.

Mittels dieses Interpolationsfaktors wird im Block 105 für den ersten Bildpunkt (x = 1) der Zeile y ein Zwischenwert berechnet gemäß der Beziehung

$$Z_n(x,y) = (1-g) \bullet K_n(x,y_o) + g \bullet K_n(x,y_u) \qquad (4)$$

Der so berechnete Zwischenwert wird zu dem Bildwert für denselben Bildpunkt addiert (Block 106) gemäß der Gleichung

$$B_{kn}(x,y) = B_n(x,y) + Z_n(x,y) \qquad (5)$$

$B_{kn}(x,y)$ stellt dabei den korrigierten Bildwert dar, durch den der Bildwert $B_n(x,y)$ ersetzt wird. Unter Benutzung des gleichen Interpolationsfaktors werden die Schritte 105 und 106 für alle anderen Bildpunkte x der Zeile y wiederholt (Block 107), so daß anschließend die Zeile y korrigiert ist.

Danach wird eine andere Zeile vorgegeben (Block 108), und für diese neue Zeile wiederum ein neuer Interpolationsfaktor g berechnet (Block 104). Mit diesen neuen Interpolationswerten werden (im Block 105) für die neue Zeile y gemäß Gleichung (4) neue Zwischenwerte berechnet und zu den Bildwerten dieser Zeile gemäß Gleichung (5) addiert (Block 106). Wenn dabei die Zeile y = $y_u$ erreicht wird, nimmt der Interpolationsfaktor g den Wert 1 an, und für diese Zeile ist gemäß Gleichung (4) $Z_n(x,y_u) = K_n(x,y_u)$, d.h. für diese Zeile ist der Zwischenwert mit dem Korrekturwert für diese Zeile identisch. Fig. 3a zeigt gestrichelt angedeutet den Verlauf der korrigierten Bildwerte $B_{kn}(x,y_u)$ für diese Zeile.

Nachdem auf diese Weise für alle Bildpunkte aller Zeilen des Abtastbereichs der Sonde n ein korrigierter Bildwert $B_{kn}$ berechnet worden ist, werden die Schritte 101 bis 108 für die nächste Sonde (n+1) wiederholt, wobei die Indizes von B und Z jeweils um 1 erhöht werden (Block 109). Wie zu Block 101 erläutert, lassen sich die Korrekturwerte für die erste Zeile $y_o$ der Sonde n+1 einfach aus den Korrekturwerten der n-ten Sonde für deren unterste Zeile $y_u$ ermitteln. Die Korrekturwerte für die unterste Zeile des Abtastbereichs der Sonde n+1 werden analog zu den Blöcken 102 und 103 ermittelt. Nachdem der entsprechende Schritt für alle Sonden wiederholt ist (wobei für die letzte Sonde abweichend von den Blöcken 102 und 103 die Korrekturwerte der letzten Zeile gleich Null gesetzt werden), ist ein Bild entstanden, in dem die geschilderten Streifen in dem Bild nahezu vollständig beseitigt sind, ohne daß die Bildinformation dabei allzusehr verändert wurde.

## Patentansprüche

1. Verfahren zum Erzeugen von Röntgenbildern, bei dem auf der Oberfläche eines Photoleiters (1) ein der Röntgenstrahlenintensität entsprechendes Ladungsmuster erzeugt wird, das mit einer Anzahl von Sonden (41) zeilenweise abgetastet wird, die die Ladung auf jeweils aneinander angrenzenden, mehrere Zeilen umfassenden Abtastbereichen des Photoleiters umfassen und von der Ladung abhängige digitale Bildwerte ($B_n(x,y)$) der Röntgenaufnahme liefern,
   gekennzeichnet durch folgende Maßnahmen:

   a) Bildung von Korrekturwerten ($K_n(x,y_o)$) für die Bildpunkte der Bildzeilen ($y_o$) an den Rändern der Abtastbereiche der Sonden (41), wobei die Größe und das Vorzeichen der Korrekturwerte so bemessen sind, daß die aus der Überlagerung der Korrekturwerte und der Bildwerte ($B_n(x,y_o)$) resultierenden korrigierten Bildwerte ($B_{kn}(x,y_o)$) der einzelnen Sonden den korrigierten Bildwerten der jeweils benachbarten Sonden entsprechen
   b) Bildung von Zwischenwerten ($Z_n(x,y)$) für die zwischen den Rändern der Abtastbereiche der Sonden befindlichen Bildzeilen (y) durch Interpolation der Korrekturwerte ($K_n(x,y_o)$; $K_n(x,y_u)$), die der gleichen Sonde zugeordnet sind
   c) Überlagerung der Korrekturwerte bzw. der Zwischenwerte und der Bildwerte zwecks Erzeugung von korrigierten Bildwerten für die Bildzeilen der Abtastbereiche.

2. Verfahren nach Anspruch 1
   dadurch gekennzeichnet, daß die Sonden (41) so über die Oberfläche des Photoleiters (1) geführt werden, daß sich die Abtastbereiche beider Sonden überlappen und daß die Korrekturwerte jeweils aus den Bildwerten einer von benachbarten Sonden abgetasteten Bildzeile ($y_o$ bzw. $y_u$) abgeleitet werden.

3. Verfahren nach einem der vorhergehenden Ansprüche,
   dadurch gekennzeichnet, daß vor der Bildung der Korrekturwerte die Wirkung von Signalspitzen (P) in den Bildzeilen ($y_u$, $y_o$) an den Rändern des Abtastbereiches unterdrückt wird, worzugsweise durch eine in Zeilenrichtung verlaufende Medianfilterung (103a).

4. Verfahren nach einem der vorhergehenden Ansprüche,
dadurch gekennzeichnet, daß eine in Zeilenrichtung verlaufende Tiefpaßfilterung (103b) durchgeführt wird, bevor die Korrekturwerte bzw. die daraus abgeleiteten Zwischenwerte zur Bildung korrigierter Bildwerte herangezogen werden.

5. Verfahren nach einem der vorhergehenden Ansprüche,
   dadurch gekennzeichnet, daß die Korrekturwerte so gebildet werden, daß die Korrekturwerte benachbarter Sonden für den gleichen Bildpunkt bzw. für benachbarte Bildpunkte die gleiche Größe, aber entgegengesetztes Vorzeichen haben.

6. Anordnung zur Durchführung des Verfahrens nach Anspruch 1 mit einem Photoleiter (1), auf dessen Oberfläche ein der örtlichen Röntgenstrahlenintensität entsprechendes Ladungsmuster erzeugt wird, mit einer Anzahl von Sonden (41), die die Ladung jeweils in einem Abtastbereich der Oberfläche des Photoleiters zeilenweise abtasten und von der Ladung an der Oberfläche abhängige elektrische Signale liefern und mit Mitteln zum Umsetzen der Signale in von der Ladung an den Bildpunkten abhängige Bildwerte,
   gekennzeichnet durch

   a) Mittel zur Bildung von Korrekturwerten ($K_n(x, y_o)$), für die Bildpunkte der Bildzeilen ($y_o$) an den Rändern der Abtastbereiche der Sonden (41), wobei die Größe und das Vorzeichen der Korrekturwerte so bemessen sind, daß die aus der Überlagerung der Korrekturwerte und der Bildwerte ($B_n(x,y_o)$) resultierenden korrigierten Bildwerte ($B_{kn}(x,y_o)$) der einzelnen Sonden den korrigierten Bildwerten der jeweils benachbarten Sonden entsprechen,
   b) Mittel zur Bildung von Zwischenwerten ($Z_n(x,y)$) für die zwischen den Rändern der Abtastbereiche der Sonden befindlichen Bildzeilen (y) durch Interpolation der Korrekturwerte ($K_n(x, y_o)$; $K_n(x,y_u)$), die der gleichen Sonde zugeordnet sind,
   c) Mittel zur Überlagerung der Korrekturwerte bzw. der Zwischenwerte und der Bildwerte zwecks Erzeugung von korrigierten Bildwerten für die Bildzeilen der Abtastbereiche.

## Claims

1. A method of forming X-ray images, in which a charge pattern which corresponds to the X-ray intensity is generated on the surface of a photoconductor (1), which charge pattern is line-wise scanned by means of a number of probes (41) which detect the charge in respective scanning zones of the photoconductor which adjoin one another and which comprise several lines, said probes supplying digital image values ($B_n(x,y)$) of the X-ray image which are dependent on the charge, characterized in that it comprises the following steps:

a) formation of correction values ($K_n(x,y_o)$) for the pixels of the image lines ($y_o$) at the edges of the scanning zones of the probes (41), the absolute value and the sign of the correction values being such that the corrected image values ($B_{kn}(x,y_o)$) of the individual probes, resulting from the superposition of the correction values and the image values ($B_n(x,y_o)$), correspond to the corrected image values of the respective neighbouring probes,
b) formation of intermediate values ($Z_n(x,y)$) for the image lines (y) situated between the edges of the scanning zones of the probes by interpolation of the correction values ($K_n(x,y_o)$; $K_n(x,y_u)$)) associated with the same probe;
c) superposition of the correction values, or the intermediate values and the image values in order to produce corrected image values for the image lines of the scanning zones.

2. A method as claimed in Claim 1, characterized in that the probes (41) are guided across the surface of the photoconductor (1) in such a manner that the scanning zones of both probes overlap and that the correction values are derived each time from the image values of an image line ($y_o$ or $y_u$) scanned by neighbouring probes.

3. A method as claimed in one of the preceding Claims, characterized in that prior to the formation of the correction values the effect of signal peaks (P) in the image lines ($y_u$, $y_o$) at the edges of the scanning zone is suppressed, preferably by way of a median filtering operation (103a) in the line direction.

4. A method as claimed in one of the preceding Claims, characterized in that a low-pass filtering operation (103b) is performed in the line direction before the correction values, or the intermediate values derived therefrom, are used to form corrected image values.

5. A method as claimed in one of the preceding Claims, characterized in that the correction values are formed in such a manner that the correction values of neighbouring probes have the same absolute value but the opposite sign for the same pixel or for neighbouring pixels.

6. A device for carrying out the method claimed in Claim 1, comprising a photoconductor (1) on the surface of which a charge pattern corresponding to the local X-ray intensity is generated, a number of probes (41) which scan the charge line-wise in a respective scanning zone on the surface of the photoconductor and supply electric signals which are dependent on the charge on the surface, and also comprising means for converting the signals into image values which are dependent on the charge in the pixels, characterized in that it comprises

a) means for forming correction values ($K_n(x,y_o)$) for the pixels of the image lines ($y_o$) at the edges of the scanning zones of the probes (41), the absolute value and the sign of the correction values being such that the corrected image values ($B_{kn}(x,y_o)$) of the individual probes, resulting from the superposition of the correction values and the image values ($B_n(x,y_o)$), correspond to the corrected image values of the respective neighbouring probes,
b) means for forming intermediate values ($Z_n(x,y)$) for the image lines (y) situated between the edges of the scanning zones of the probes by interpolation of the correction values ($K_n(x,y_o)$, $K_n(x,y_u)$)) associated with the same probe,
c) means for superposing the correction values, or the intermediate values, and the image values in order to produce corrected image values for the image lines of the scanning zones.

**Revendications**

1. Procédé de production d'images radiographiques, dans lequel un schéma de charge correspondant à l'intensité des rayons X est produit à la surface d'un photoconducteur (1), lequel schéma est balayé par lignes avec un nombre de sondes (41) qui englobent la charge sur des zones de balayage du photoconducteur respectivement adjacentes et comprenant plusieurs lignes et délivrent des valeurs d'image numériques ($B_n(x,y)$) dépendant de la charge de la radiographie, caractérisé par les mesures suivantes :

a) la formation de valeurs de correction ($K_n(x,y_o)$)) pour les pixels des lignes d'image ($y_o$) sur les bords des zones de balayage des sondes (41), la taille et le signe des valeurs de correction étant dimensionnés de telle sorte que les valeurs d'image corrigées ($B_{kn}(x,y_o)$)) résultant de la superposition des valeurs de correction et des valeurs d'image ($B_n(x,y_o)$)) des sondes individuelles correspondent aux valeurs d'image corrigées des sondes respectivement voisines;

b) la formation des valeurs intermédiaires ($Z_n$(x,y)) pour les lignes d'image (y) se trouvant entre les bords des zones de balayage des sondes par interpolation des valeurs de correction ($K_n(x,y_o)$) ; $K_n(x,y_u)$) qui sont affectées à la même sonde;

c) la superposition des valeurs de correction ou des valeurs intermédiaires et des valeurs d'image en vue de la production de valeurs d'image corrigées pour les lignes d'image des zones de balayage.

2. Procédé selon la revendication 1, caractérisé en ce que les sondes (41) sont dirigées sur la surface du photoconducteur (1), que les surfaces de balayage des deux sondes se chevauchent et que les valeurs de correction sont respectivement dérivées des valeurs d'image d'une ligne d'image ($y_o$ ou $y_u$) balayée par des sondes voisines.

3. Procédé selon l'une des revendications précédentes, caractérisé en ce qu'avant la formation des valeurs de correction, l'effet des pointes de signal (P) est supprimé dans les lignes d'image ($y_u$, $y_o$) sur les bords de la zone de balayage, de préférence par un filtrage médian (103a) s'étendant dans la direction des lignes.

4. Procédé selon l'une des revendications précédentes, caractérisé en ce qu'un filtrage passe-bas (103b) s'étendant dans la direction des lignes est effectué avant que les valeurs de correction ou les valeurs intermédiaires dérivées de là ne soient utilisées en vue de la formation de valeurs d'image corrigées.

5. Procédé selon l'une des revendications précédentes, caractérisé en ce que les valeurs de correction sont formées de telle sorte que les valeurs de correction de sondes voisines pour le même pixel ou pour des pixels voisins aient la même grandeur mais des signes opposés.

6. Dispositif d'exécution du procédé selon la revendication 1 avec un photoconducteur (1) à la surface duquel un schéma de charge correspondant à l'intensité locale des rayons X est produit avec un nombre de sondes (41) qui balaient respectivement la charge ligne par ligne dans une zone de balayage de la surface du photoconducteur et délivrent des signaux électriques dépendant de la charge à la surface et avec des moyens pour la conversion des signaux en valeurs d'image dépendant de la charge sur les pixels, caractérisé par

a) des moyens pour la formation de valeurs de correction ($K_n(x,y_o)$)) pour les pixels des lignes d'image ($y_o$) sur les bords des zones de balayage des sondes (41), la grandeur et le signe des valeurs de correction étant dimensionnés de telle sorte que les valeurs d'image ($B_{kn}(x,y_o)$)) corrigées des sondes individuelles résultant de la superposition des valeurs de correction et des valeurs d'image ($B_n(x,y_o)$)) correspondent aux valeurs d'image corrigées des sondes respectivement voisines;

b) des moyens pour la formation de valeurs intermédiaires ($Z_n(x,y)$)) pour les lignes d'image (y) se trouvant entre les bords des zones de balayage des sondes par interpolation des valeurs de correction ($K_n(x,y_o)$); $K_n(x,y_u)$) qui sont affectées à la même sonde;

c) des moyens en vue de la superposition des valeurs de correction ou des valeurs intermédiaires et des valeurs d'image en vue de la production de valeurs d'image corrigées pour les lignes d'image des zones de balayage.

FIG. 1

$B(x_i,y)$

**FIG. 2a**

$Z(x_i,y)$

**FIG. 2b**

$B_K(x_i,y)$

**FIG. 2c**

$B_{n+1}(x,yo)$    P    $B_{kn}(x,yu)$

$B_n(x,yu)$

**FIG. 3a**

$x_1$    $x_2$

$D_n(x,yu)$

**FIG. 3b**

$x_1$    $x_2$

$K_n(x,yu)$

**FIG. 3c**

FIG. 4